# FASCICULE DE BREVET EUROPEEN

(11) **EP 4 480 301 B1**
(45) Date de publication et mention de la délivrance du brevet: **24.09.2025**
(21) Numéro de dépôt: 24180790.8
(22) Date de dépôt: 07.06.2024
(51) Int. Cl.: A01D 85/00, B65G 57/28

(54) **PALETTISEUR POUR BLOCS DE PAILLE**
PALETTIERER FÜR STROHBLÖCKE
A PALLETIZER FOR STRAW PACKS

(30) Priorité: 22.06.2023 FR 2306450
(43) Date de publication de la demande: 25.12.2024
(73) Titulaire: NJO, 49310 Lys-Haut-Layon (FR)
(72) Inventeur: OUDHOF, Nicolaas, 49350 Gennes Val de Loire (FR)
(74) Mandataire: Lequien, Philippe

(56) Documents cités:
- WO-A1-2010/007241
- FR-A1- 2 601 648
- FR-A1- 2 696 713
- US-A1- 2017 202 147

## Description

Le domaine de l'invention est celui de la conception et de la fabrication d'équipements facilitant la manutention et le conditionnement de blocs de paille d'isolation.

L'invention concerne plus particulièrement un palettiseur de blocs de paille.

Dans le domaine de l'isolation thermique par la paille, la paille est conditionnée en étant compressée et ficelée, sous une forme adaptée à la réalisation d'une isolation thermique par la paille, c'est-à-dire sous forme de blocs de paille de forme parallélépipédique rectangle de petites dimensions.

Un palettiseur pour blocs de paille est connu par exemple du FR 2 696 713 A1, WO 2010/007241 A1 ou FR 2 601 648 A1.

Pour renforcer la pertinence de la paille comme solution d'isolation thermique, il est nécessaire de pouvoir conditionner les blocs de paille sur des palettes pour permettre leur convoyage par camion afin de diminuer le coût global de mise en oeuvre d'une isolation thermique par la paille.

Par raison écologique, il est recherché à approvisionner les professionnels du bâtiment en atelier ou sur les chantiers en blocs de paille issus de productions fourragères locales. Ces professionnels sont aujourd'hui essentiellement des charpentiers, mais le besoin s'exprime également dans les métiers de la maçonnerie, de l'enduisage, ou de la plâtrerie.

De ce fait, les lieux de production de blocs de paille tendent à être installés dans des petites structures, et des solutions peu onéreuses, robustes, et tendant à limiter les coûts globaux d'exploitation, sont recherchées.

L'invention a notamment pour objectif de répondre à ce besoin.

Plus précisément, l'invention a pour objectif de proposer une solution permettant de conditionner des blocs de paille sur des palettes de manutention.

L'invention a également pour objectif de fournir une telle solution qui soit économique à mettre en oeuvre, robuste, et qui permette de limiter un coût global de production et de fourniture de blocs de paille pour la mise en oeuvre d'une isolation thermique par la paille.

Ces objectifs, ainsi que d'autres qui apparaîtront par la suite, sont atteints grâce à l'invention qui a pour objet un palettiseur pour blocs de paille selon la revendication 1, comprenant
- un bâti ;
- un berceau comprenant un plateau de chargement de blocs de paille et une base support de palette de manutention, la base support s'étendant depuis une extrémité du plateau perpendiculairement au plateau, le berceau étant monté au moins mobile à rotation sur le bâti entre une position couchée de chargement destinée à permettre l'empilement de blocs de pailles sur le plateau contre une palette portée par la base support, et une position relevée dans laquelle le plateau s'étend verticalement, et dans laquelle la base support est destinée à autoriser le retrait d'une palette supportant des blocs de paille ;
- des moyens de compression de blocs de paille empilés sur le plateau contre une palette dans la position couchée du berceau ;
- des moyens de ligature de blocs de paille à une palette sur lesquels ils sont compressés dans la position couchée du berceau.

Grâce au palettiseur selon l'invention, il est possible de réaliser une palette de blocs de paille qui présente une hauteur particulièrement importante tout en étant stable. Ceci de permet d'optimiser le volume disponible dans un camion de transport en réalisant des palettes de blocs de paille qui présentent une hauteur maximisée en fonction de la hauteur sous plafond disponible dans un camion de transport.

En effet, le palettiseur selon l'invention amène à former la palette de bloc de paille dans une position couchée sur le côté, sur le plateau du berceau. Il suffit à un opérateur humain de positionner les blocs de paille les uns sur les autres, contre la palette puis dans le prolongement des blocs situés contre la palette.

L'ergonomie humaine est recherchée, étant donné qu'un opérateur seul peut palettiser jusqu'à 4 tonnes de matière par jour. Le plateau de chargement est pour cela pensé à hauteur d'homme.

Les moyens de compression écrasent ensuite l'ensemble des blocs de paille contre la palette, puis les moyens de ligature permettent de maintenir une cohésion entre eux des blocs de paille compressés contre la palette, ainsi que de maintenir associé cet ensemble de blocs de paille compressés avec la palette de manutention.

Il suffit enfin de basculer le berceau de sa position couchée à sa position relevée pour obtenir la palette de blocs de paille stable prête à être manutentionnée.

La compression des blocs de paille et leur ligature tendent à stabiliser le chargement de blocs de paille sur la palette de manutention, et ce malgré une hauteur potentielle particulièrement élevée de la palette de blocs de paille.

Le palettiseur forme une solution particulièrement adaptée au conditionnement de blocs de paille, économique à mettre en oeuvre, robuste, et qui permet *in fine* de limiter un coût global de production et de fourniture de blocs de paille pour la mise en oeuvre d'une isolation thermique par la paille.

Selon une conception préférée, les moyens de compression comprennent :
- un chariot monté mobile en translation sur le bâti ;
- un bloc de pressage solidaire du chariot, le bloc de pressage présentant une surface de pressage s'étendant parallèlement à la base support dans la position couchée du berceau.

Les moyens de compression sont ainsi formés de manière simple et robuste, et la compression des blocs de paille sur le berceau est produite par la translation du chariot en direction de la base support.

Après ligature des blocs de paille compressés contre une palette de manutention, le chariot peut être reculé pour permettre un levage du berceau.

Selon une solution préférée, le palettiseur comprend un moteur actionnant les moyens de compression et le berceau par le biais de moyens de transmission.

Les moyens de transmission sont ainsi configurés pour ordonner séquentiellement l'actionnement des moyens de compression et le basculement du berceau.

Le palettiseur peut avantageusement comprendre un unique moteur.

Il est ainsi rationalisé les composants du palettiseur.

Selon un mode de réalisation avantageux, les moyens de transmission comprennent une chaîne de transmission principale entraînée en mouvement par le moteur, la chaîne de transmission décrivant une boucle le long de laquelle le chariot est solidarisé.

De cette manière, le moteur travaille toujours en traction soit pour tracter le chariot en direction de la base support dans la position couchée du berceau afin de réaliser la compression des blocs de paille, soit pour tracter le chariot en direction opposée à la base support dans la position couchée du berceau après compression et ligature à la palette des blocs de paille.

Préférentiellement, les moyens de transmission comprennent au moins une chaîne de levage solidarisée à l'une de ses extrémités au berceau sur un point inférieur d'ancrage à tracter, la chaîne de levage étant entraînée par la chaîne de transmission principale au moins pendant une phase de levage du berceau vers sa position relevée.

La ou les chaînes de levage permettent au moteur de réaliser une traction pour entraîner le levage du berceau vers sa position relevée.

Avantageusement, la chaîne de levage est solidarisée à l'autre de ses extrémités au chariot.

La synchronisation entre l'actionnement des moyens de compression et l'actionnement du berceau est ainsi réalisée mécaniquement.

En effet, une fois que la compression des blocs de paille est réalisée et après que le chariot se soit suffisamment reculé, ce dernier va tracter la ou les chaînes de levage, et ainsi débuter le levage du berceau.

Selon une solution avantageuse, les moyens de transmission comprennent au moins une chaîne d'abaissement solidarisée à l'une de ses extrémités au berceau sur un point supérieur d'ancrage à tracter pour entraîner le passage du berceau de sa position relevée à sa position couchée, la chaîne d'abaissement étant entraînée par la chaîne de transmission principale au moins pendant une phase terminale de levage du berceau vers sa position relevée, et au moins pendant une phase initiale de couchage du berceau vers sa position couchée.

En plus de servir à l'abaissement du berceau vers sa position couchée, la chaîne d'abaissement permet de retenir le berceau lors de son levage vers sa position relevée, après que le centre de gravité de la palette chargée de ses blocs de paille soit passé au-delà d'un plan vertical dans lequel s'inscrit un axe de rotation du berceau par rapport au bâti, afin d'éviter que le berceau et la palette ne tombent trop brutalement sur le sol et ne se renversent.

Selon une caractéristique préférée, la chaîne d'abaissement est solidarisée à l'autre de ses extrémités au bâti par l'intermédiaire d'un moyens de mise en tension élastique, et intègre des moyens d'embrayage situés entre les deux extrémités de la chaîne d'abaissement, à un point de bascule de forces de traction entre la chaîne de levage et la chaîne d'abaissement.

Ces moyens de mise en tension élastique et ces moyens d'embrayage facilitent l'accouplement mécanique de la chaîne d'abaissement pour permettre sa traction par le moteur, et évitent une dégradation de cette chaîne d'abaissement, par exemple à cause d'un glissement des dents d'un pignon sur les maillons de cette chaîne d'abaissement.

Avantageusement, la base support présente des évidements autorisant l'insertion de bras d'une fourche de levage d'un dispositif de manutention de palettes.

De cette manière, la palette de manutention chargée peut être directement manutentionnée à l'aide d'un transpalette, ou d'un chariot de levage de palettes, sans manipulation intermédiaire.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en perspective d'un palettiseur selon l'invention, avec un berceau en position couchée de chargement supportant une palette avec des blocs de paille ;
- la figure 2 est une représentation schématique en perspective selon un autre angle de vue du palettiseur selon l'invention représenté sur la figure 1 ;
- la figure 3 est une représentation schématique en perspective d'un palettiseur selon l'invention, avec un berceau en position relevé, et avec une fourche d'un appareil de levage représentée insérée dans une base support du berceau ;
- la figure 4 illustre schématiquement l'actionnement du berceau et de moyens de compression, à un stade où le berceau est dans une position couchée de chargement et où les moyens de compression sont susceptibles de compresser des blocs de paille contre une palette de manutention ;
- la figure 5 illustre schématiquement l'actionnement du berceau et de moyens de compression, à un stade où le berceau est dans sa position couchée de chargement et où les moyens de compression se rétractent ;
- la figure 6 illustre schématiquement l'actionnement du berceau et de moyens de moyens de compression, à un stade où le berceau bascule de sa position couchée de chargement vers sa position relevée, et où les moyens de compression continuent de se rétracter ;
- la figure 7 illustre schématiquement l'actionnement du berceau et de moyens de moyens de compression, à un stade où le berceau est dans sa position relevée, et où les moyens de compression ont atteint une position retractée terminale.

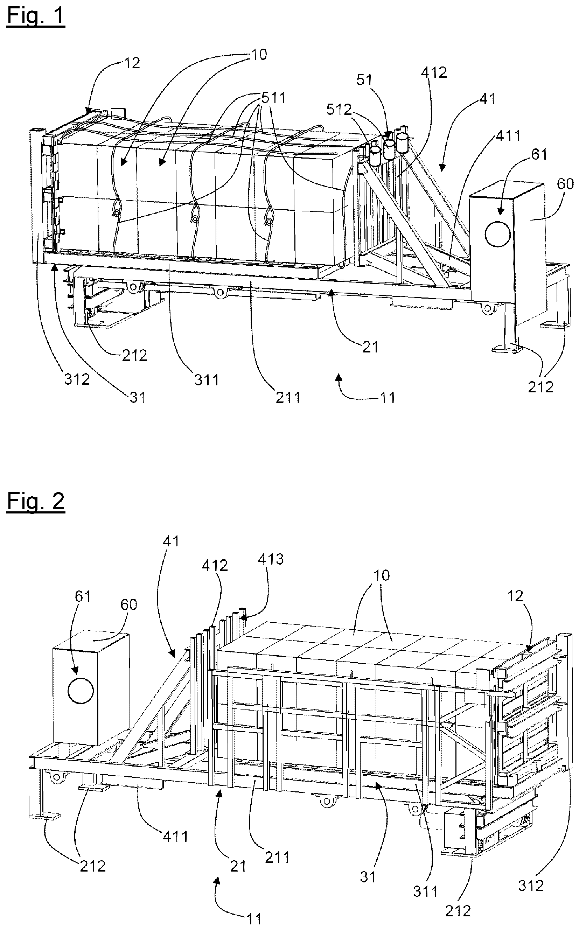

En référence aux figures 1 à 3, un palettiseur 11 selon l'invention est représenté.

Ce palettiseur 11 est conçu pour permettre de palettiser des blocs 10 de paille.

Les blocs 10 de paille assument chacun une forme parallélépipédique.

Tel que cela est détaillé par la suite, ce palettiseur 11 est conçu pour permettre la réalisation de palettes de blocs 10 de paille.

Une palette de blocs 10 de paille correspond à une palette 12 de manutention sur laquelle sont disposés et empilés des blocs 10 de paille.

Selon l'exemple illustré par les figures 1 et 2, le palettiseur 11 permet la production d'une palette comprenant sept étages empilés sur la palette 12 de manutention, avec quatre blocs 10 de paille par étage.

A l'aide du palettiseur 11, la palette de blocs de paille est constituée en étant couchée sur l'un de ses côtés latéraux, puis est redressée verticalement de manière à ce qu'elle repose sur la palette 12 de manutention.

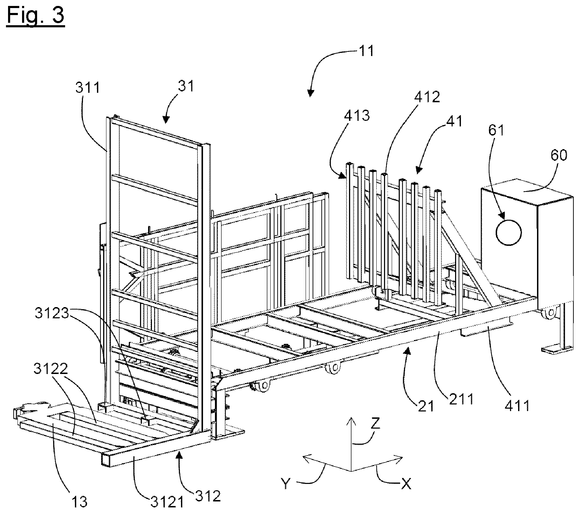

A cet effet, le palettiseur 11 comprend :
- un bâti 21 ;
- un berceau 31 monté mobile sur le bâti 21 entre une position couchée de chargement notamment illustrée par les figures 1 et 2, et une position relevée notamment illustrée par la figure 3 ;
- des moyens de compression 41 de blocs 10 de paille empilés sur le plateau 311 contre une palette 12 dans la position couchée du berceau 31 ;
- des moyens de ligature 51 de blocs 10 de paille à une palette 12 sur lesquels ils sont compressés dans la position couchée du berceau 31.

En référence à la figure 3, un repère spatial orthonormé est représenté.

Ce repère comprend :
- un axe X définissant une direction longitudinale ;
- un axe Y définissant une direction latérale ;
- un axe Z définissant une direction transversale.

Ces trois axes s'étendent orthogonalement les uns par rapport aux autres.

Tel qu'illustré par les figures 1 à 3, le bâti 21 correspond à un assemblage mécano-soudé de profilés, notamment de profilés métalliques.

Le bâti 21 comprend un cadre 211 s'étendant parallèlement à un plan défini par les axes X et Y. Il est envisageable que ce cadre 211 soit formé à l'aide d'un panneau métallique ou en un autre matériau tel que du bois.

Le bâti 21 comprend également des piétements 212 définissant un plan de pose du bâti sur un sol. Ces piétements 212 peuvent être pourvus de moyens de réglage afin de s'assurer de la stabilité du bâti 21, voire de permettre de s'assurer que le cadre 211 s'étende dans un plan horizontal.

En référence aux figures 1 à 7, le berceau 31 est à présent décrit.

Ce berceau 31 comprend un plateau 311 de chargement de blocs 10 de paille et une base support 312 de palette 12 de manutention.

Le plateau 311 correspond également à un assemblage mécano-soudé de profilés métalliques. Il est également envisageable que ce plateau 311 soit formé à l'aide d'un panneau métallique ou en un autre matériau tel que du bois.

La base support 312 s'étend depuis le plateau 311.

Plus précisément, la base support 312 s'étend depuis une extrémité du plateau 311 perpendiculairement au plateau 311.

En référence plus spécifiquement à la figure 3, la base support 312 comprend un élément principal 3121 s'étendant orthogonalement par rapport au plateau 311, et deux éléments secondaires 3122 s'étendant perpendiculairement à l'élément principal 3121, dans un plan orthogonal au plateau 311.

La base support 312 comprend encore deux extensions 3123 s'étendant perpendiculairement depuis le plateau 311.

Cette base support 312 est conçu pour pouvoir porter une palette 12.

A cet effet, la base support 312 définit un plan support d'une palette 12.

Ce plan support est défini par des faces supérieures des deux éléments secondaires 3122, et des extensions 3123.

Cette base support 312 présente également des évidements autorisant l'insertion de bras d'une fourche de levage 13 d'un dispositif de manutention de palettes, tel que cela est illustré par la figure 3.

Ces évidements sont notamment formés entre les éléments secondaires 3122, et entre les extensions 3123 et l'élément secondaire 3122 proximal.

En référence aux figures 1 à 7, le berceau 31 est monté au moins mobile à rotation sur le bâti 21 autour d'un point pivot 310. Ce point pivot 310 s'étend parallèlement à l'axe Y.

Selon le présent mode de réalisation, le berceau 31 est uniquement monté mobile à rotation sur le bâti 21, toutefois il est envisageable selon d'autres modes de réalisation que le berceau 31 soit monté mobile à rotation et présente au moins un autre degré de liberté. Par exemple, le pivot pourrait être glissant.

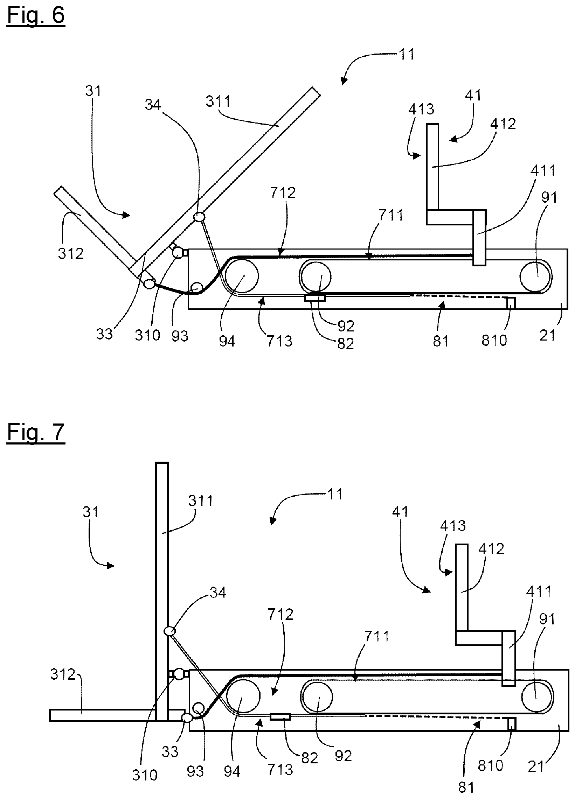

Le berceau 31 est mobile entre une position couchée de chargement (illustrée par les figures 1, 2, 4, 5) destinée à permettre l'empilement de blocs 10 de pailles sur le plateau 311 contre une palette 12 portée par la base support 312, et une position relevée (illustrée par les figures 3, et 7).

Dans la position couchée du berceau 31, la base support 312 s'étend verticalement, parallèlement à un plan défini par les axes Z et Y.

Dans la position relevée du berceau, le plateau 311 s'étend verticalement, parallèlement à un plan défini par les axes Z et Y, et la base support 312 est destinée à autoriser le retrait d'une palette 12 supportant des blocs 10 de paille.

Tel que cela est détaillé par la suite, le berceau 31 est actionné par un moteur 61.

En référence aux figures 1 à 7, les moyens de compression sont à présent décrits.

Pour rappel, ces moyens de compression 41 sont conçus pour comprimer des blocs 10 de paille empilés sur le plateau 311 contre une palette 12 dans la position couchée du berceau 31.

L'action de compression de ces moyens support est réalisée le long de l'axe X.

Les moyens de compression 41 comprennent :
- un chariot 411 monté mobile en translation sur le bâti 21 ;
- un bloc de pressage 412 solidaire du chariot 411.

Le chariot 411 est plus précisément monté mobile sur le bâti le long de l'axe X. Ce chariot 411 comprend par exemple une armature mécano-soudée pourvue de roues engagées dans des passages longitudinaux présentés par le bâti 21 et s'étendant parallèlement à l'axe X.

Le bloc de pressage 412 est formé en l'occurrence par un assemblage de tubes métalliques de section rectangulaire, et plus spécifiquement de section carrée.

Le blocs de pressage 412 présente une surface de pressage 413 qui s'étend parallèlement à la base support 312 dans la position couchée du berceau 31.

Tel que cela est détaillé par la suite, les moyens de compression 41 sont actionnés par le moteur 61.

En référence à la figure 1, les moyens de ligature 51 sont à présent décrits.

Ces moyens de ligature 51 (uniquement représentés sur la figure 1) sont conçus pour lier les blocs 10 de paille à une palette 12 sur lesquels ils sont compressés dans la position couchée du berceau 31.

Dans leur forme la plus simple, ces moyens de ligatures 51 peuvent prendre la forme d'au moins un support à bobines 512 de fils de ligature 511 qui constituent un consommable.

En l'occurrence, les moyens de ligature 51 représentés comprennent trois supports supportant trois bobines 512, mais peuvent également comprendre quatre supports avec quatre bobines. De ces bobines sont tirés des fils de ligature 511, préalablement au positionnement des blocs 10 de paille, à une longueur suffisante pour que les fils de ligature 511 entourent la palette de blocs de paille qui est destinée à être formée.

Des fils de ligatures 511 horizontaux sont également utilisés pour regrouper des blocs de paille entre eux.

En référence aux figure 1 à 3, le palettiseur 11 comprend un moteur 61 (illustré schématiquement) qui actionne les moyens de compression 41 et le berceau 31. Le moteur 61 est notamment un moteur électrique.

Cet actionnement par le moteur 61 est réalisé par le biais de moyens de transmission.

Le moteur 61 est intégré au sein d'un ensemble 60 de commande et d'actionnement pourvu de de moyens de contrôle du moteur, autorisant un opérateur humain de déclencher ou d'arrêter le moteur, de contrôler son sens de rotation, voire également de contrôler sa vitesse de rotation.

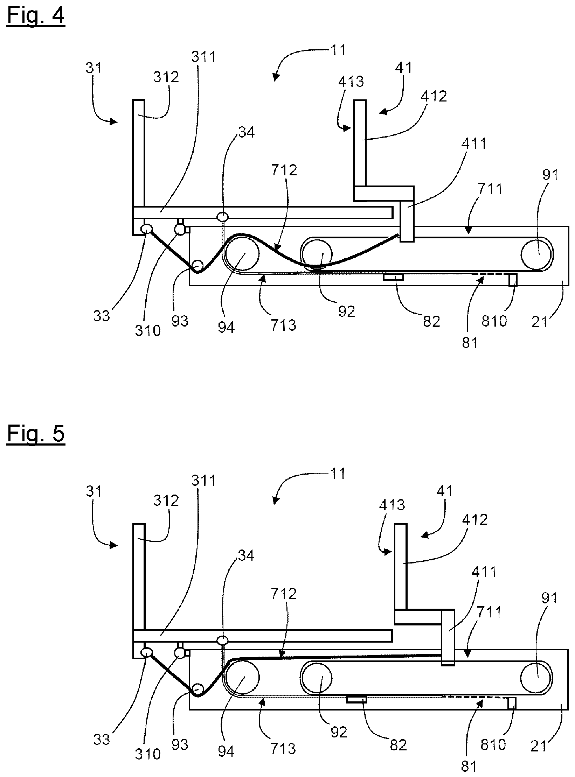

En référence aux figures 4 à 7, les moyens de transmission sont plus précisément décrits ci-après.

Les moyens de transmission comprennent, selon le présent mode de réalisation :
- une chaîne de transmission principale 711 ;
- au moins une chaîne de levage 712, et en l'occurrence deux chaînes de levage 712 (une seule représentée) du berceau 31 ;
- au moins une chaîne d'abaissement 713, et en l'occurrence deux chaînes d'abaissement 713 (une seule représentée) du berceau 31.

La chaîne de transmission principale 711 est entraînée en mouvement par le moteur 61.

A cet effet, le palettiseur 11 comprend :
- un pignon moteur 91, monté mobile à rotation sur le bâti 21, et couplé au moteur 61 pour pouvoir transmettre le mouvement de rotation produit par le moteur 61 ;
- un arbre de renvoi 92, monté mobile à rotation sur le bâti 21.

La chaîne de transmission principale 711 est engrenée sur le pignon moteur 91 ainsi que sur un pignon porté par l'arbre de renvoi 92.

Une rotation du pignon moteur 91 entraîne ainsi en mouvement la chaîne de transmission principale 711 et également la rotation de l'arbre de renvoi 92.

La chaîne de transmission principale 711 décrit une boucle le long de laquelle le chariot 411 est solidarisé.

Plus précisément, la chaîne de transmission principale 711 est couplée à ses deux extrémités au chariot 411 pour former la boucle.

La partie supérieure de la chaîne de transmission entre le pignon moteur 91 et l'arbre de renvoi 92 s'étend parallèlement à l'axe X de manière à ce que la progression de la chaîne de transmission principale 711 entraîne un déplacement relatif du chariot 411 le long de l'axe X.

La chaîne de levage 712 est conçue pour lever le berceau 31 de sa position couchée à sa position relevée.

Selon le présent mode de réalisation, la chaîne de levage 712 est solidarisée à l'une de ses extrémités au berceau 31 sur un point inférieur d'ancrage 33 à tracter, et est entraînée par la chaîne de transmission principale 711 au moins pendant une phase de levage du berceau 31 vers sa position relevée.

Tel qu'illustré par les figures, la chaîne de levage 712 est engrené sur un arbre intermédiaire 94 pourvu d'un pignon adapté à la chaîne de levage 712, et s'enroule partiellement autour d'un pignon libre 93 de positionnement pour diriger l'effort de traction qu'elle exerce pour lever le berceau 31.

Toujours selon le présent mode de réalisation, la chaîne de levage 712 est solidarisée à l'autre de ses extrémités au chariot 411.

En conséquence, quand le chariot recule, en passant de sa position illustrée par la figure 4 jusqu'à sa position illustrée par la figure 7, la chaîne de levage 712 est mise en tension puis tractée provoquant ainsi le levage du berceau 31.

La chaîne d'abaissement 713 est quant à elle solidarisée à l'une de ses extrémités au berceau 31 sur un point supérieur d'ancrage 34 à tracter pour entraîner le passage du berceau 31 de sa position relevée à sa position couchée.

Cette chaîne d'abaissement 713 est entraînée par la chaîne de transmission principale 711 pendant une phase terminale de levage du berceau 31 vers sa position relevée.

La chaîne d'abaissement 713 est également entraînée par la chaîne de transmission principale 711 pendant une phase initiale de couchage du berceau 31 vers sa position couchée.

A cet effet, la chaîne d'abaissement 713 est solidarisée à l'autre de ses extrémités au bâti 21 par l'intermédiaire de moyens de mise en tension élastique 81, et intègre des moyens d'embrayage 82 situés entre les deux extrémités de la chaîne d'abaissement 713, à un point de bascule de forces de traction entre la chaîne de levage 712 et la chaîne d'abaissement 713.

Les moyens de mise en tension élastique 81 correspondent par exemple à une bande en matériau élastique, tel que du caoutchouc, et est fixée sur un point d'attache fixe 810 du bâti 21.

Les moyens d'embrayage 82 sont quant à eux formés par un maillon de chaîne allongé sur lequel des dents d'un pignon ne peuvent pas s'engrener.

La chaîne d'abaissement 713 est engrenée sur l'arbre intermédiaire 94. En conséquence, quand l'arbre intermédiaire 94 est entraîné en rotation par la traction de la chaîne de levage 712, cet arbre intermédiaire 94 entraîne la traction de la chaîne d'abaissement 713.

Le point de bascule de forces de traction entre la chaîne de levage 712 et la chaîne d'abaissement 713 correspond à un endroit situé le long de la chaîne d'abaissement 713 qui est au contact avec l'arbre intermédiaire 94 quand la bascule du berceau 31 de sa position couchée vers sa position relevée atteint un stade où le centre de gravité estimé ou calculé est sensé est au niveau du point pivot 310 le long de l'axe X.

En référence aux figures 1 à 7, la mise en oeuvre et le fonctionnement du palettiseur 11 sont à présent décrits.

Dans un premier temps, le palettiseur 11 est dans sa configuration illustrée par la figure 5, c'est-à-dire avec le berceau 31 dans sa position couchée, et avec le chariot 411 légèrement reculé par rapport à sa position adoptée sur la figure 4.

Les moyens de compression 41 n'empêchent pas le positionnement de blocs 10 de paille sur le berceau 31.

Un opérateur humain peut alors positionner une palette 12 de manutention contre la base support 312.

Lors du positionnement de cette palette 12, il doit être fait attention à orienter la palette 12 de manière à ce qu'elle puisse être saisie par une fourche de levage après le levage du berceau 31 vers sa position relevée.

L'opérateur humain utilise alors les moyens de ligature 51 en prélevant des longueurs suffisantes de fils de ligatures 511 pour les faire reposer sur le plateau 311 de chargement, les faire passer à l'intérieur de la palette 12 de manutention, et avoir des longueurs libres suffisantes tel que cela est illustré par la figure 1.

L'opérateur peut alors charger les blocs 10 de paille de la manière illustrée par les figures 1 et 2.

L'opérateur actionne alors le moteur 61 de manière à ce que le pignon moteur 91, illustré par les figures 4 et 5, soit entraîné selon une rotation dans un sens anti-horaire.

Ceci provoque la traction du chariot 411 et la compression par la surface de compression 413 des blocs de paille contre la palette 12.

La configuration relative des éléments du palettiseur 11 illustré par la figure 4 est atteinte.

Dans cette situation, l'opérateur procède à la ligature des blocs 10 de paille à l'aide des fils de ligatures 511.

La compression appliquée le temps de la ligature permet à l'opérateur de nouer la ligature sans forcer.

S'il y a 4 blocs de paille par rang, avant de comprimer, il est important de placer les ligatures horizontales, et de serrer les blocs par paquets de 4, afin de solidariser les blocs ensemble et d'éviter les vides au milieu des paquets. Une bonne compaction horizontale permet une optimisation du chargement. Cette opération est faite à la main, à l'aide d'un nœud coulant par exemple. Ceci doit être fait avant la compression verticale mécanique pour éviter que le paquet ne s'ouvre au milieu au moment d'appuyer.

À ce stade, l'opérateur peut actionner le moteur 61 de manière à ce que le pignon moteur 91 soit entraîné selon une rotation dans un sens horaire.

A ce moment, les blocs de paille se décompriment, la ligature se tend, les nœuds se serrent, et les blocs de paille participent à la tenue de l'ensemble. La ligature étant passée dans l'armature de la palette, alors un ensemble stable est créé.

Progressivement, le palettiseur 11 va passer par ses configurations illustrées par la figure 5, puis par la figure 6, et enfin atteindre sa configuration atteinte dans la figure 7.

Tout d'abord, la chaîne de transmission principale 711 va tracter le chariot 411 et mettre en tension la chaîne de levage 712. À ce stade, les moyens de compression 41 ne limitent plus le levage du berceau 31.

La suite de l'entraînement engendré par le moteur 61 va débuter le levage du berceau 31.

En effet, la chaîne de levage 712 exerce une traction sur le point inférieur d'ancrage 33 ce qui débute le levage du berceau 31.

Le palettiseur atteint alors la configuration illustré par la figure 6.

À ce stade, un point d'équilibre est censé être atteint par le berceau 31 par rapport au point pivot 310. La progression de la chaîne levage 712 a provoqué également la traction de la chaîne d'abaissement 713 qui a accompagné le levage du berceau 31. Au stade illustré, et à ce point d'équilibre, afin d'éviter une dégradation de la chaîne d'abaissement 713 les moyens d'embrayage 82 évitent un glissement des dents de l'arbre intermédiaire 94 sur les maillons de la chaîne d'abaissement 713.

Une fois que ce stade est franchi, la chaîne d'abaissement 713 s'engrène de nouveau avec les dents de l'arbre intermédiaire 94 et la chaîne d'abaissement 713 vient alors réaliser un effort visant à accompagner progressivement la phase de levage terminale du berceau 31 afin d'éviter que ce dernier ne vienne percuter le sol de manière potentiellement destructrice.

La configuration illustrée par la figure 7 est enfin atteinte, et l'opérateur peut utiliser un engin de levage afin de manutentionner la palette de blocs de paille formée.

L'opérateur humain, après avoir retiré la palette de blocs de paille, peut actionner de nouveau le moteur dans le sens contraire afin de remettre le berceau 31 dans sa position couchée.

Le palettiseur décrit précédemment présente une conception simple, robuste, économique.

## Revendications

1. Palettiseur (11) pour blocs (10) de paille, comprenant
- un bâti (21) ;
- un berceau (31) comprenant un plateau (311) de chargement de blocs (10) de paille et une base support (312) de palette (12) de manutention, la base support (312) s'étendant depuis une extrémité du plateau (311) perpendiculairement au plateau (311), le berceau (31) étant monté au moins mobile à rotation sur le bâti (21) entre une position couchée de chargement destinée à permettre l'empilement de blocs (10) de pailles sur le plateau (311) contre une palette (12) portée par la base support (312), et une position relevée dans laquelle le plateau (311) s'étend verticalement, et dans laquelle la base support (312) est destinée à autoriser le retrait d'une palette (12) supportant des blocs (10) de paille ;
- des moyens de compression (41) de blocs (10) de paille empilés sur le plateau (311) contre une palette (12) dans la position couchée du berceau (31) ;
- le palettiseur (11) étant **caractérisé en ce qu'**il comprend des moyens de ligature (51) de blocs (10) de paille à une palette (12) sur lesquels ils sont compressés dans la position couchée du berceau (31).

2. **Palettiseur** (11) selon la revendication précédente, **caractérisé en ce que** les moyens de compression (41) comprennent :
- un chariot (411) monté mobile en translation sur le bâti (21) ;
- un bloc de pressage (412) solidaire du chariot (411), le bloc de pressage (412) présentant une surface de pressage (413) s'étendant parallèlement à la base support (312) dans la position couchée du berceau (31).

3. **Palettiseur** (11) selon l'une quelconque des revendications précédentes, **caractérisé en ce qu'**il comprend un moteur (61) actionnant les moyens de compression (41) et le berceau (31) par le biais de moyens de transmission.

4. **Palettiseur** (11) selon les revendications 2 et 3, **caractérisé en ce que** les moyens de transmission comprennent une chaîne de transmission principale (711) entraînée en mouvement par le moteur (61), la chaîne de transmission principale (711) décrivant une boucle le long de laquelle le chariot (411) est solidarisé.

5. **Palettiseur** (11) selon l'une quelconque des revendications 3 et 4, caractérisé en ce en ce que les moyens de transmission comprennent au moins une chaîne de levage (712) solidarisée à l'une de ses extrémités au berceau (31) sur un point inférieur d'ancrage (33) à tracter pour entraîner le passage du berceau de sa position couchée à sa position relevée, la chaîne de levage (712) étant entraînée par la chaîne de transmission principale (711) au moins pendant une phase de levage du berceau (31) vers sa position relevée.

6. **Palettiseur** (11) selon les revendications 4 et 5, **caractérisé en ce que** la chaîne de levage (712) est solidarisée à l'autre de ses extrémités au chariot (411).

7. **Palettiseur** (11) selon l'une quelconque des revendications 3 à 6, **caractérisé en ce que** les moyens de transmission comprennent au moins une chaîne d'abaissement (713) solidarisée à l'une de ses extrémités au berceau (31) sur un point supérieur d'ancrage (34) à tracter pour entraîner le passage du berceau (31) de sa position relevée à sa position couchée, la chaîne d'abaissement (713) étant entraînée par la chaîne de transmission principale (711) au moins pendant une phase terminale de levage du berceau (31) vers sa position relevée, et au moins pendant une phase initiale de couchage du berceau (31) vers sa position couchée.

8. Palettiseur (11) selon la revendication 7, et l'une quelconque des revendications 5 et 6, **caractérisé en ce que** la chaîne d'abaissement (713) est solidarisée à l'autre de ses extrémités au bâti (21) par l'intermédiaire de moyens de mise en tension élastique (81), et intègre des moyens d'embrayage (82) situés entre les deux extrémités de la chaîne d'abaissement (713), à un point de bascule de forces de traction entre la chaîne de levage (712) et la chaîne d'abaissement (713).

9. Palettiseur 11 selon l'une quelconque des revendications précédentes, **caractérisé en ce que** la base support 312 présente des évidements autorisant l'insertion de bras d'une fourche de levage 13 d'un dispositif de manutention de palettes.

## Patentansprüche

1. Palettierer (11) für Strohblöcke (10), umfassend:
- einen Rahmen (21);
- ein Gestell (31), das eine Ladeplatte (311) für Strohblöcke (10) und eine Stützbasis (312) für eine Handhabungspalette (12) umfasst, wobei sich die Stützbasis (312) von einem Ende der Platte (311) senkrecht zur Platte (311) erstreckt, wobei das Gestell (31) mindestens drehbar auf dem Rahmen (21) zwischen einer liegenden Ladeposition, die dazu bestimmt ist, das Stapeln von Strohblöcken (10) auf der Platte (311) gegen eine von der Stützbasis (312) getragene Palette (12) zu ermöglichen, und einer angehobenen Position, in der sich die Platte (311) vertikal erstreckt, montiert ist, und wobei die Stützbasis (312) dazu bestimmt ist, das Entfernen einer Palette (12), die Strohblöcke (10) trägt, zu gewährleisten;
- Kompressionsmittel (41) für Strohblöcke (10), die auf der Platte (311) gegen eine Palette (12) in der liegenden Position des Gestells (31) gestapelt sind;
- wobei der Palettierer (11) **dadurch gekennzeichnet ist, dass** er Mittel (51) zum Binden von Strohblöcken (10) an eine Palette (12) umfasst, auf denen sie in der liegenden Position des Gestells (31) zusammengepresst werden.

2. Palettierer (11) nach dem vorhergehenden Anspruch, **dadurch gekennzeichnet, dass** die Kompressionsmittel (41) Folgendes umfassen:
- einen Schlitten (411), der verschiebbar auf dem Rahmen (21) montiert ist;
- einen Pressblock (412), der fest mit dem Schlitten (411) verbunden ist, wobei der Pressblock (412) eine Pressfläche (413) aufweist, die sich parallel zur Trägerbasis (312) in der liegenden Position des Gestells (31) erstreckt.

3. Palettierer (11) nach einem der vorhergehenden Ansprüche, **dadurch gekennzeichnet, dass** er einen Motor (61) umfasst, der die Kompressionsmittel (41) und das Gestell (31) über Übertragungsmittel betätigt.

4. Palettierer (11) nach den Ansprüchen 2 und 3, **dadurch gekennzeichnet, dass** die Übertragungsmittel eine Hauptübertragungskette (711) umfassen, die vom Motor (61) zur Bewegung angetrieben wird, wobei die Hauptübertragungskette (711) eine Schleife beschreibt, entlang derer der Schlitten (411) fest verbunden ist.

5. Palettierer (11) nach einem der Ansprüche 3 und 4, **dadurch gekennzeichnet, dass** die Übertragungsmittel mindestens eine Hubkette (712) umfassen, die an einem ihrer Enden fest mit dem Gestell (31) an einem zu ziehenden unteren Verankerungspunkt (33) verbunden ist, um den Übergang des Gestells von seiner liegenden Position in seine angehobene Position anzutreiben, wobei die Hubkette (712) mindestens während einer Hubphase des Gestells (31) von der Hauptübertragungskette (711) in ihre angehobene Position angetrieben wird.

6. Palettierer (11) nach den Ansprüchen 4 und 5, **dadurch gekennzeichnet, dass** die Hubkette (712) am anderen Ende fest mit dem Schlitten (411) verbunden ist.

7. Palettierer (11) nach einem der Ansprüche 3 bis 6, **dadurch gekennzeichnet, dass** die Übertragungsmittel mindestens eine Absenkkette (713) umfassen, die an einem ihrer Enden fest mit dem Gestell (31) an einem zu ziehenden oberen Verankerungspunkt (34) verbunden ist, um den Übergang des Gestells (31) von ihrer angehobenen Position in ihre liegende Position anzutreiben, wobei die Absenkkette (713) mindestens während einer Endphase des Anhebens des Gestells (31) von der Hauptübertragungskette (711) in ihre angehobene Position und mindestens während einer anfänglichen Liegeposition des Gestells (31) in ihre liegende Position angetrieben wird.

8. Palettierer (11) nach Anspruch 7 und einem der Ansprüche 5 und **6, dadurch gekennzeichnet, dass** die Absenkkette (713) an ihrem anderen Ende über elastische Spannmittel (81) fest mit dem Gestell (21) verbunden ist und Kupplungsmittel (82) integriert, die sich zwischen den beiden Enden der Absenkkette (713) an einem Kipppunkt der Zugkräfte zwischen der Hubkette (712) und der Absenkkette (713) befinden.

9. Palettierer 11 nach einem der vorhergehenden Ansprüche, **dadurch gekennzeichnet, dass** die Trägerbasis 312 Aussparungen aufweist, die das Einführen von Armen einer Hubgabel 13 einer Palettenhandhabungsvorrichtung gewährleisten.

## Claims

1. A palletiser (11) for blocks (10) of straw, comprising:
- a frame (21);
- a cradle (31) comprising a plate (311) for loading blocks (10) of straw and a support base (312) for a handling pallet (12), the support base (312) extending from an end of the plate (311) perpendicularly to the plate (311), the cradle (31) being mounted at least movable in rotation on the frame (21) between a loading lying position intended to enable stacking of blocks (10) of straw on the plate (311) against a pallet (12) carried by the support base (312), and a raised position in which the plate (311) extends vertically, and in which the support base (312) is intended to authorise removal of a pallet (12) supporting blocks (10) of straw;
- means (41) for compressing blocks (10) of straw stacked on the plate (311) against a pallet (12) in the lying position of the cradle (31);
- the palletiser (11) being **characterised in that** it comprises means (51) for tying blocks (10) of straw to a pallet (12) on which they are compressed in the lying position of the cradle (31).

2. The palletiser (11) according to the preceding claim, **characterised in that** the compression means (41) comprise:
- a carriage (411) mounted movable in translation on the frame (21);
- a pressing block (412) integral with the carriage (411), the pressing block (412) having a pressing surface (413) extending in parallel to the support base (312) in the lying position of the cradle (31).

3. The palletiser (11) according to any one of the preceding claims, **characterised in that** it comprises a motor (61) actuating the compression means (41) and the cradle (31) by transmission means.

4. The palletiser (11) according to claims 2 and 3, **characterised in that** the transmission means comprise a main transmission chain (711) movably driven by the motor (61), the main transmission chain (711) describing a loop along which the carriage (411) is secured.

5. The palletiser (11) according to any one of claims 3 and 4, **characterised in that** the transmission means comprise at least one lifting chain (712) secured at one of its ends to the cradle (31) on a lower anchor point (33) to be pulled to cause passage of the cradle from its lying position into its raised position, the lifting chain (712) being driven by the main transmission chain (711) at least during a lifting phase of the cradle (31) towards its raised position.

6. The palletiser (11) according to claims 4 and 5, **characterised in that** the lifting chain (712) is secured at the other end thereof to the carriage (411).

7. The palletiser (11) according to any one of claims 3 to **6, characterised in that** the transmission means comprise at least one lowering chain (713) secured at one of its ends to the cradle (31) on an upper anchor point (34) to be pulled to cause passage of the cradle (31) from its raised position into its lying position, the lowering chain (713) being driven by the main transmission chain (711) at least during a terminal phase of lifting the cradle (31) towards its raised position, and at least during an initial phase of lying the cradle (31) towards its lying position.

8. The palletiser (11) according to claim **7,** and any one of claims 5 and **6, characterised in that** the lowering chain (713) is secured at the other end thereof to the frame (21) by means of elastic tensioning means (81), and integrates clutch means (82) located between the two ends of the lowering chain (713), at a tilt point of pull forces between the lifting chain (712) and the lowering chain (713).

9. The palletiser 11 according to any one of the preceding claims, **characterised in that** the support base 312 has recesses authorising the insertion of arms of a lifting fork 13 of a pallet handling device.
